# EUROPÄISCHE PATENTSCHRIFT

(11) **EP 2 589 994 B1**
(45) Veröffentlichungstag und Bekanntmachung des Hinweises auf die Patenterteilung: **11.05.2016**
(21) Anmeldenummer: 11190501.4
(22) Anmeldetag: 24.11.2011
(51) Int. Cl.: G02B 5/12, G06K 19/06

(54) **Optisch auslesbarer Datenträger**
Optical data carrier
Support de données lisible optiquement

(30) Priorität: 02.11.2011 EP 11187506
(43) Veröffentlichungstag der Anmeldung: 08.05.2013
(73) Patentinhaber: Siemens Aktiengesellschaft, 80333 München (DE)
(72) Erfinder: Beck, Thomas, 90579 Langenzenn (DE); Schwamm, Stefan, 90475 Nürnberg (DE)

(56) Entgegenhaltungen:
- EP-A1- 2 296 020
- US-A- 5 118 930
- US-A1- 2011 228 391

## Beschreibung

Die Erfindung betrifft einen optisch auslesbaren Datenträger gemäß dem Oberbegriff des Patentanspruchs 1, und eine Anordnung gemäß dem Patentanspruch 8.

Optische Codes werden in vielen Bereichen der Materialwirtschaft und Produktion zur Identifizierung von Werkstücken oder Produkten bzw. von Trägersystemen, die die Werkstücke oder Produkte tragen, verwendet. Solche Codes können beispielsweise Strichcodes/Barcodes, Datamatrix-Codes, QR-Codes, PDF417-Codes o.ä. sein. Zwar können diese Codes auch direkt auf dem Werkstück, Produkt oder dem Träger aufgebracht sein, wie man es beispielsweise auch von den Barcodes auf Lebensmittel-Verpackungen kennt, aber in vielen Fällen werden auch sog. "optische Datenträger" verwendet, also separate Karten oder Etiketten, auf denen der optische Code aufgebracht ist. Solche optischen Datenträger werden beispielsweise dann eingesetzt, wenn sich das eigentliche Produkt oder der eigentliche Träger des Produktes oder des Werkstücks nicht direkt kennzeichnen lässt, beispielsweise durch Bedrucken, oder aber in solchen Fällen, in denen ein- und derselbe optische Code mehrfach verwendet werden soll, beispielsweise bei mehrfachem Durchlauf durch eine Produktionsanlage. Insbesondere bei Anwendungen, in denen der optische Code und damit der optische Datenträger häufig wiederverwendet wird, wird Wert darauf gelegt, dass das Trägermaterial des optisch auslesbaren Datenträgers und der darauf aufgebrachte optische Code gegenüber mechanischen Einwirkungen und Umwelteinflüssen widerstandsfähig ist.

Eine wesentliche Anforderung an gebräuchliche optisch auslesbare Datenträger besteht weiterhin darin, dass ein optimaler Kontrast und damit eine gute Lesesicherheit der Markierung gegeben ist. Insbesondere bei industriellen Anwendungen kann oft eine gleichbleibende, gleichmäßige, gute Ausleuchtung nicht flächendeckend und nicht zu jeder Zeit garantiert werden, so dass bei einer gleichzeitig hohen Anforderung an eine Betriebssicherheit ein hoher Aufwand dafür aufgewendet werden muss, dass die optischen Datenträger an jeder Verarbeitungsstation und zu jeder Zeit zuverlässig erfasst werden. So ist es daher oft notwendig und üblich, an allen Verarbeitungsstationen, an denen ein optischer Datenträger gelesen werden soll, leistungsstarke Leuchten einzusetzen, und durch weitere Mittel (aufwendige mechanische Komponenten) eine optimale Positionierung und Ausrichtung (Neigung) der optischen Datenträger zu gewährleisten. Manchmal sind sogar mehrere Lesegeräte simultan im Einsatz, um mit hoher Wahrscheinlichkeit eine erfolgreiche Auslesung der optischen Datenträger zu gewährleisten.

Zur Erzeugung von gut lesbaren, kontrastreichen optischen Datenträgern, die gleichzeitig eine gute Beständigkeit gegenüber mechanischen Einflüssen haben, ist es beispielsweise bekannt, den optischen Code aus einem hochglänzenden Aluminiumblech oder Edelstahlblech herauszuschneiden, beispielsweise mittels Laser-Technologie, und das derart durchbrochene Blech auf einem dunklen Untergrund zu applizieren. Solche Lösungen können in der Tat sehr lange und entsprechend häufig in Produktionsanlagen wiederverwendet werden, weil die Bleche eine gute Beständigkeit gegenüber mechanischen Einflüssen aufweisen. Andererseits weisen solche Lösungen auch Nachteile auf, die beispielsweise darin bestehen, dass solche aus Blech herausgearbeiteten "Etiketten" sehr aufwändig herzustellen sind, weil beispielsweise jeweils eine CNC-Fräsmaschine oder ein Laser-Nibbler programmiert werden muss, etc. Bei der Verwendung von Aluminiumblech, welches sich oft besser bearbeiten lässt als die Edelstahlbleche, kommt hinzu, dass Aluminium gegen Oxidation geschützt werden muss, um eine gleichbleibend gute Reflexion von Licht und damit eine gleichbleibend gute Lesbarkeit zu gewährleisten. Ein weiterer Nachteil besteht darin, dass nicht alle möglichen Codes, insbesondere bei den Datamatrix-Codes, generiert werden können, sondern immer ein zusammenhängender Materialverbund bestehen bleiben muss. Ein weiterer Nachteil besteht darin, dass bei den bekannten optischen Datenträgern, insbesondere auch bei den erwähnten Ausführungsformen aus gestanzten Blechen, Streulicht-empfindlich sind. Dies bedeutet, dass nicht nur dasjenige Licht, welches von einer zur Belichtung des Datenträgers bestimmten Lichtquelle emittiert wird, entsprechend vom optischen Datenträger zu einer Kamera (Lesegerät) hin reflektiert wird, sondern dass das Streulicht das Auslesen behindern kann. Zwar können entsprechende Abschirmmaßnahmen vorgesehen werden, die jedoch einen zusätzlichen Aufwand erfordern und nicht überall einsetzbar sind.

Zur Verbesserung der Erkennungsrate der optischen Datenträger werden heutzutage meist Kameras eingesetzt, die neben dem Objektiv und somit nahe an der optischen Achse eine oder mehrere Leuchten aufweisen, die zur Ausleuchtung des optischen Datenträgers dienen. Zum einen ist man damit unabhängig von externer Beleuchtung, und zum anderen nimmt der Einfluss von Streulicht anderer Lichtquellen auf das Auslesen des optischen Datenträgers um so mehr ab, je stärker (heller) die Kamera-eigene Beleuchtung die Ausleuchtung des auszulesenden Datenträgers vornimmt; eine vollständige Kompensation des Fremdlichtes (Streulichtes) gelingt jedoch um so weniger, je heller und je wechselnder das (unerwünschte) Fremdlicht bzw. Streulicht ist.

Die Druckschrift US 5,118,930 - Takada "Retroflective sheet having a stickable surface" offenbart einen optischen Datenträger, der eine reflektierende Folie mit einer Vielzahl reflektierender Elemente aufweist.

Die Veröffentlichung EP 2 296 020 A1 - Chirhart et al. "Retroflective Sheeting with controlled cap-Y" offenbart die Beeinflussung des Reflexionsvermögens eines retroflektierendes Materials mittels Farbpigmenten.

Auch die Druckschrift US 2011 / 0228391 A1 - Bacon, JR et al. "Protective overlay bearing a graphic, and retroflective articles comprising the overlay" offenbart eine Methode zur Texturierung einer retroflektierenden Schicht durch Bedruckung einer Rückseite einer transparenten Abdeckfolie vor dem Laminiervorgang.

Es ist also eine Aufgabe der vorliegenden Erfindung, einen optischen Datenträger vorzuschlagen, der auch unter widrigen Umweltbedingungen zuverlässig ausgelesen werden kann.

Es ist eine Kernidee der vorliegenden Erfindung, zur Herstellung des auszulesenden optischen Codes ein Material zu verwenden, welches einfallendes Licht vorzugsweise in diejenige Richtung zurückreflektiert, aus der es eingefallen ist. Mit einem solchen Material kann die von der Kamera-eigenen Beleuchtung emittierte Strahlung zu der Kamera zurückreflektiert werden, während das (unerwünschte) Streulicht einen wesentlich geringeren Anteil an der Bilderzeugung der Kamera hat. Dabei hat sich herausgestellt, dass Reflexionsfolien, wie sie prinzipiell auch im Bau von Verkehrsschildern und zur Herstellung von Sicherheits-Kleidung etc. verwendet werden, dazu geeignet sind, mit maximaler Intensität das Licht, das vom Lesegerät bzw. einer dem Objektiv des Lesegerätes benachbarten Lichtquelle ausgestrahlt wird, in die Richtung der Kamera zu reflektieren. Die Information (Codierung) des Codes wird dann durch Auflegen/Aufkleben einer Maske, beispielsweise einer Transparenten Folie mit aufgedrucktem Code-Muster, "aufmoduliert". Zum Schutz gegen Umwelteinflüsse (mechanisch/chemisch) kann eine weitere transparente Schicht appliziert werden. Dazu kann auch gehärtetes Glas, Acrylglas, PE-Folie oder anderes transparentes Material verwendet werden.

Die Aufgabe wird insbesondere durch einen optisch auslesbaren Datenträger gemäß dem Patentanspruch 1 gelöst. Dabei wird ein optisch auslesbarer Datenträger für eine maschinelle Erfassung mittels einer Kamera vorgeschlagen, wobei der Datenträger eine mittels eines graphischen Musters oder einer maschinenlesbaren Schrift codierte Information umfasst. Dabei umfasst der Datenträger weiter eine Licht reflektierende erste Folie, auf der eine transparente zweite Folie angeordnet ist, wobei diese transparente zweite Folie mit dem grafischen Muster oder der maschinenlesbaren Schrift bedruckt ist und die mit einer Entspiegelung versehen und/oder auf ihrer einer Kamera zuweisenden Oberfläche mattiert ist. Dabei besteht die erste Folie aus einem Kunststoff-Material, welches eine Vielzahl reflektierender Elemente (RE) enthält. Bei der Verwendung eines solchen optisch auslesbaren Datenträgers kann vorteilhaft eine Kamera mit im Vergleich zu der in Streulichtquellen geringer Eigenbeleuchtung verwendet werden, wobei weiterhin ein guter und gleichbleibend hoher Kontrast und eine geringe Streulicht-Empfindlichkeit gegeben ist. Zudem lässt sich ein solcher optischer Datenträger preiswert herstellen.

Die Aufgabe wird außerdem durch eine Anordnung gemäß dem Patentanspruch 8 gelöst.

Vorteilhafte Ausgestaltungen des erfindungsgemäßen optisch auslesbaren Datenträgers sind in den abhängigen Ansprüchen angegeben, wobei deren Merkmale und die damit verknüpften Vorteile sowohl einzeln, als auch in Kombination miteinander realisiert sein können.

In einer vorteilhaften Ausgestaltung ist die bedruckte transparente Folie mit einer weiteren transparenten Schutzschicht versehen, wodurch die mechanische Beständigkeit erhöht wird. Insbesondere wird ein Abreiben des "aufgedruckten" Codes vermieden. Die transparente Schutzschicht kann weiterhin mit einer Beschichtung versehen sein, welche die darunter befindlichen Schichten vor UV-Licht und damit vor Vergilben oder Verblassen schützt. Weiter kann die transparente Schicht vorteilhaft eine Entspiegelung bewirken, die die Lesbarkeit des optischen Datenträgers weiter verbessert. Solche Entspiegelungen sind beispielsweise auch von hochwertigen optischen Gläsern bekannt, beispielsweise als Vergütung bei optischen Objektiven oder Brillengläsern.

Vorteilhaft besteht die erste Folie aus einem Kunststoff-Material, in welchem eine Vielzahl einzelner reflektierender Elemente enthält, die vorteilhaft im Wesentlichen kugelförmig, halbkugelförmig oder prismatisch ausgeformt sind. Vorteilhaft bestehen sie aus Glas oder aus einem im Wesentlichen transparenten Kunststoff. Solche reflektierenden Elemente weisen die Eigenschaft auf, dass einfallendes Licht im Wesentlichen in dieselbe Richtung zurück reflektiert wird, aus dem es einfällt. Seitliches Streulicht wird im Wesentlichen ebenfalls richtungsgebunden zurückreflektiert, so dass es im Wesentlichen zu der Streulichtquelle zurückreflektiert wird, nicht jedoch in andere Richtungen gestreut wird, insbesondere nicht zur Kamera.

Vorteilhaft besteht die transparente Schutzschicht aus einer Kunststoff-Folie oder aus einem Glas oder Kunstglas. Zur Vermeidung unerwünschter Reflektionen ist die transparente Schutzschicht zumindest auf ihrer einer Kamera zuweisenden Oberfläche mattiert, oder weist eine der bereits beschriebenen Vergütungen oder Beschichtungen auf.

Vorteilhaft sind die erste und die zweite Folie miteinander verklebt, so dass zwischen diesen beiden Folien keine unerwünschten Lichtbrechungen oder Reflexionen auftreten können. Die zweite Folie besteht dabei vorteilhaft aus einem selbstklebend beschichteten Material. In einer alternativen Ausführungsform kann jedoch eine Klebstoff-Schicht separat eingebracht werden. Auch die Schutzschicht ist vorteilhafterweise auf der zweiten Folie aufgeklebt, wobei auch diese selbstklebend ausgeführt sein kann.

Ausführungsbeispiele des erfindungsgemäßen optisch auslesbaren Datenträgers und der erfindungsgemäßen Anordnung werden nachfolgend anhand der Zeichnungen erläutert.

Dabei zeigen:
- Figur 1: schematisch in Schnittdarstellung den schichtweisen Aufbau eines erfindungsgemäßen optisch auslesbaren Datenträgers, und
- Figur 2: in einer ebenfalls schematischen Darstellung eine Anordnung aus einem erfindungsgemäßen optisch auslesbaren Datenträger, einer einem Lesegerät und aus einer Fremdlichtquelle.

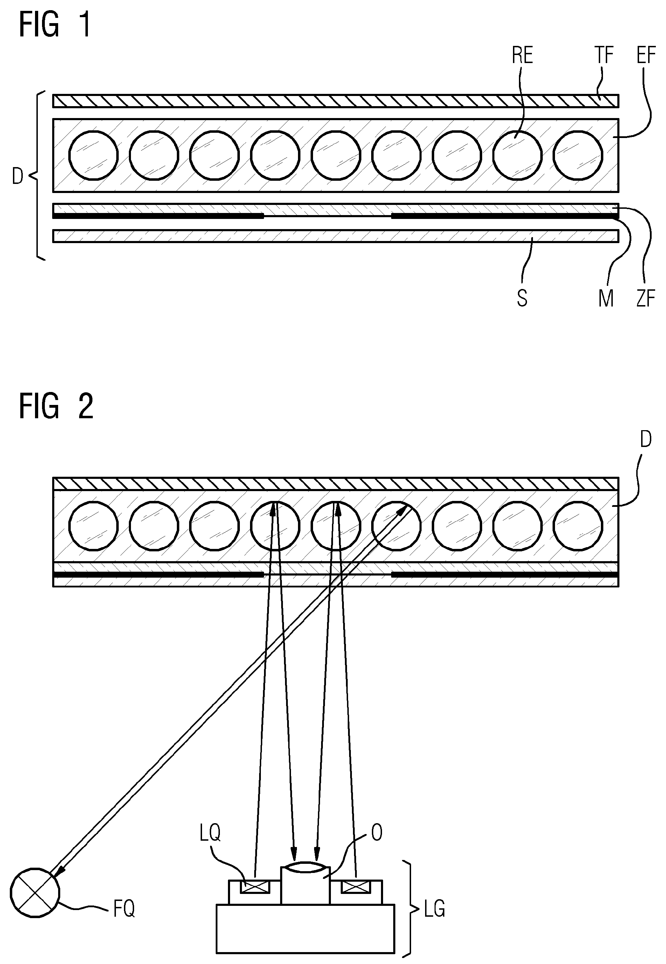

In der Figur 1 ist schematisch in einer Schnittdarstellung ein optisch auslesbarer Datenträger D dargestellt, der aus einer Trägerfolie TF, einer ersten Folie EF, einer zweiten, bedruckten Folie ZF und einer Schutzschicht S besteht. Während in der Realität die verschiedenen Folien (Schichten) miteinander verklebt oder laminiert sind, sind diese zur besseren Übersichtlichkeit in der Figur 1 getrennt dargestellt. Zu beachten ist, dass die Schichten, insbesondere hinsichtlich der Schicht-Dicken und der Ausgestaltung (Durchmesser) und Anzahl der reflektierenden Elemente RE nicht maßstabsgerecht ist. Insbesondere die in der ersten Folie EF angeordneten reflektierenden Elemente RE bestehen in der Realität aus sehr kleinen Glas- oder Kunstglas-Partikeln. Diese können auch verschachtelt und in mehreren Lagen übereinander angeordnet sein. Die zweite Folie ZF ist mit einem Muster M bedruckt, wobei statt eines Drucks mit Druckfarbe oder Toner (Laserdruck) alternativ auch eine Maskierung durch eine in Form des optischen Codes geschnittene, in-transparente (schwarze) Klebefolie verwendet sein kann. Die Trägerfolie TF kann (nicht dargestellt) reflektierend beschichtet sein, beispielsweise durch Bedampfen mit Aluminium etc. Demgegenüber sind die erste Folie EF, die zweite Folie ZF und die Schutzschicht S transparent ausgestaltet, wobei insbesondere der Brechungsindex des Materials (Kunststoff) der ersten Folie EF signifikant vom Brechungsindex des Materials der reflektierenden Elemente RE (z.B. Glas) abweichen sollte. Der Aufbau des Datenträgers D entspricht im Wesentlichen dem prinzipiellen Aufbau reflektierender Verkehrsschilder o.ä.

In der Figur 2 ist der bereits anhand der Figur 1 erläuterte Datenträger D, hier ebenfalls schematisch und nicht-maßstabsgerecht dargestellt, in einer Anordnung mit einem Lesegerät LG dargestellt, wobei das Lesegerät LG im Wesentlichen aus einem Objektiv 0 (Linsensystem), Lichtquellen LQ und einer (nicht dargestellten) Elektronik besteht, also im Wesentlichen eine Kamera mit Objektiv-nahem Beleuchtungssystem und einer Auswerteelektronik ist. Die Elektronik, die im Wesentlichen dem Stand der Technik entspricht, besteht beispielsweise aus einem Bildsensor (CCD-Chip oder CMOS-Chip), einem Speicher, einer Auswerteelektronik und einer Schnittstelle zu einer Automatisierungsanordnung. Daneben ist in der Figur 2 noch eine Fremdlichtquelle FQ dargestellt, die stellvertretend für eine zufällige externe Lichtquelle oder Streulichtquelle steht. Die in der Figur 2 dargestellten Pfeile stellen schematisch das von den Lichtquellen LQ und der Fremdlichtquelle FQ emittierte und von dem Datenträger D reflektierte Licht dar. Die in der Figur 2 dargestellten Elemente, insbesondere der Datenträger D und das Lesegerät LG, sind beispielsweise Bestandteile einer Anordnung zum Erkennen eines Werkstücks oder eines Werkstückträgers in einer industriellen Automatisierungs-Anordnung, wobei der Begriff "Werkstück" für ein beliebiges, mit dem Datenträger D gekennzeichnetes Objekt stehen soll, und wobei ein Werkstück-Träger für ein beliebiges Transportmedium stehen soll, mit welchem ein nicht selbst gekennzeichnetes Werkstück innerhalb der Automatisierungsanordnung vorgehalten und bewegt wird.

In der Figur 2 ist zu sehen, dass die in dem Datenträger D enthaltenen reflektierenden Elemente RE die einfallenden Lichtstrahlen, die von den Lichtquellen LQ und der Fremdlichtquelle FQ emittiert werden, im Wesentlichen in die Richtung der jeweiligen Lichtquelle LQ, FQ zurückreflektieren. Dabei ist ebenfalls zu sehen, dass das Licht, welches von der Fremdlichtquelle FQ stammt, das sog. Fremd- oder Streulicht, im Wesentlichen nicht zu dem Objektiv 0 des Lesegerätes LG reflektiert wird. Weiter ist zu sehen, dass das Licht, das von den Lichtquellen LQ emittiert wird, durch entsprechende Reflexionen in den reflektierenden Elementen RE im Wesentlichen vollständig zu dem Lesegerät LG zurückreflektiert wird, so dass sich die Lichtintensität des reflektierten Lichtes nicht wesentlich von der Intensität des emittierten Lichtes unterscheidet. Zu den Figuren 1 und 2 ist zu bemerken, dass das dargestellte Muster M in der Darstellung nur eine einzige Lücke aufweist, und somit nur eine einzige kleine Informationseinheit darstellt. In einer realen Anordnung hätte das ggf. auch 2-dimensionale Muster M eine Vielzahl von abwechselnd durchsichtigen und undurchsichtigen Elementen, um eine entsprechend große Informationsmenge zu codieren.

Wie anhand der schematischen Darstellung in der Figur 2 zu sehen ist, trägt das vom Lesegerät LG bzw. den Lichtquellen LQ emittierte Licht maßgeblich zum bildlichen Eindruck bei, der von einer Kamera des Lesegerätes LG aufgenommen wird. Das Fremdlicht der Fremdlichtquelle FQ trägt hingegen kaum zum bildlichen Eindruck beim erzeugten elektronischen Abbild der Kamera bei. Dies ermöglicht einen maximalen und situationsunabhängigen Symbol-Kontrast über eine maximale Entfernung und damit die Maximierung der Lesesicherheit. Hierbei ist besonders hervorzuheben, dass die optische Erkennbarkeit und der Kontrast des optischen Codes des Datenträgers D über einen großen Arbeitsbereich und über einen großen Winkelbereich hinweg, also unabhängig von einem Neigungswinkel des Datenträgers D relativ zur optischen Achse ("Blickrichtung") des Lesegerätes LG, erreicht wird. Durch die Verwendung der speziellen reflektierenden Elemente RE ist die Leseanordnung sehr unempfindlich gegenüber Fremdlicht. Durch die Realisierung durch an sich bekannte Folien bzw. Reflexionsfolien sind die hier beschriebenen Datenträger sehr preisgünstig herzustellen, und dennoch von dauerhafter Machart.

## Patentansprüche

1. Optisch auslesbarer Datenträger (D) für eine maschinelle Erfassung mittels eines kamera-basierten Lesegeräts (LG) mit
- einer mittels eines grafischen Musters (M) oder einer maschinenlesbaren Schrift codierten Information, und
- einer Licht reflektierenden ersten Folie (EF), die aus einem Kunststoff-Material besteht, welches eine Vielzahl reflektierender Elemente (RE) enthält,
- eine auf der reflektierenden ersten Folie (EF) angeordneten transparenten zweiten Folie (ZF), die mit dem grafischen Muster (M) oder der maschinenlesbaren Schrift bedruckt ist,
**gekennzeichnet durch**
- eine auf der transparenten zweiten Folie (ZF) angeordneten transparente Schutzschicht (S), die mit einer Entspiegelung versehen und/oder auf ihrer einer Kamera zuweisenden Oberfläche mattiert ist.

2. Datenträger (D) nach Patentanspruch 1,
bei dem die reflektierenden Elemente (RE) im Wesentlichen kugelförmig, halbkugelförmig oder prismatisch ausgeformt sind.

3. Datenträger (D) nach einem der Patentansprüche 1 oder 2,
bei dem die reflektierenden Elemente (RE) aus Glas oder aus einem transparenten Kunststoff bestehen.

4. Datenträger (D) nach einem der Patentansprüche 1 bis 3,
bei dem die transparente Schutzschicht (S) aus einer Kunststoff-Folie oder einem Glas besteht.

5. Datenträger (D) nach einem der Patentansprüche 1 bis 4,
bei dem die erste und die zweite Folie (ZF) miteinander verklebt sind.

6. Datenträger (D) nach Patentanspruch 5,
bei dem die zweite Folie (ZF) aus einem selbstklebend beschichteten Material besteht.

7. Datenträger (D) nach einem der Patentansprüche 1 bis 6,
bei dem die Schutzschicht (S) auf der zweiten Folie aufgeklebt ist.

8. Anordnung zum Erkennen eines Werkstücks oder eines Werkstück-Trägers in einer industriellen Automatisierungs-Anordnung mit
- einem optisch auslesbaren Datenträger (D) gemäß Patentanspruch 1, mit dem das Werkstück oder der Werkstückträger markiert ist, und
- einem kamera-basierten Lesegerät (LG) zum Auslesen des Datenträgers (D),
- wobei das Lesegerät (LG) mit zumindest einer in der Nähe seiner optischen Achse angeordneten Lichtquelle (LQ) versehen ist, die zur Ausleuchtung des Datenträgers (D) ausgerichtet ist.

## Claims

1. Optical data carrier (D) for automatic reading by means of a camera-based reader (LG) comprising
- information encoded by means of a graphic pattern (M) or a machine-readable script, and
- a light-reflecting first film (EF), which consists of a plastics material that contains a multiplicity of reflective elements (RE),
- a transparent second film (ZF), which is arranged on the reflective first film (TF) and is printed with the graphic pattern (M) or the machine-readable script,
**characterized by**
- a transparent protective layer (S), which is arranged on the transparent second film (ZF) and is provided with an antireflective finish and/or is matted on its surface facing a camera.

2. Data carrier (D) according to Patent Claim 1,
in which the reflective elements (RE) are of a substantially spherical, hemispherical or prismatic form.

3. Data carrier (D) according to either of Patent Claims 1 and 2,
in which the reflective elements (RE) consist of glass or of a transparent plastic.

4. Data carrier (D) according to one of Patent Claims 1 to 3,
in which the transparent protective layer (S) consists of a film of plastic or a glass.

5. Data carrier (D) according to one of Patent Claims 1 to 4,
in which the first and the second film (ZF) are adhesively bonded to one another.

6. Data carrier (D) according to Patent Claim 5,
in which the second film (ZF) consists of a self-adhesively coated material.

7. Data carrier (D) according to one of Patent Claims 1 to 6,
in which the protective layer (S) is adhesively bonded on the second film.

8. Arrangement for detecting a workpiece or a workpiece carrier in an industrial automation arrangement comprising
- an optical data carrier (D) according to Patent Claim 1, with which the workpiece or the workpiece carrier is marked, and
- a camera-based reader (LG) for reading the data carrier (D),
- the reader (LG) being provided with at least one light source (LQ), which is arranged in the vicinity of its optical axis and is aligned for illuminating the data carrier (D).

## Revendications

1. Support (D) de données déchiffrable visuellement pour une détection automatique, au moyen d'un appareil ( LG ) de lecture, reposant sur un appareil photographique, comprenant
- un information codée au moyen d'un motif ( M ) graphique ou d'un écrit déchiffrable par ordinateur et
- une première feuille ( EF ) qui réfléchit la lumière et qui est constituée d'un matériau en matière plastique, qui contient une pluralité d'éléments ( RE ) réfléchissants,
- une deuxième feuille ( ZF ) transparente, qui est mise sur la première feuille ( EF ) réfléchissante et qui est imprimée du motif ( M ) graphique ou de l'inscription déchiffrable par ordinateur,
**caractérisé par**
- une feuille ( S ) transparente de protection, qui est mise sur la deuxième feuille ( ZF ) transparente, qui est munie d'un traitement anti-reflet et/ou qui est dépolie sur sa surface tournée vers un appareil photographique.

2. Support ( D ) de données suivant la revendication 1,
dans lequel les éléments ( RE ) réfléchissants sont sensiblement sphériques, hémisphériques ou prismatiques.

3. Support ( D ) de données suivant l'une des revendications 1 ou 2,
dans lequel les éléments ( RE ) réfléchissants sont en verre ou en une matière plastique transparente.

4. Support ( D ) de données suivant l'une des revendications 1 à 3,
dans lequel la couche ( S ) transparente de protection est en une feuille de matière plastique ou en un verre.

5. Support ( D ) de données suivant l'une des revendications 1 à 4,
dans lequel la première et la deuxième feuilles ( ZF ) sont collées l'une à l'autre.

6. Support ( D ) de données suivant la revendication 5,
dans lequel la deuxième feuille ( ZF ) est en une matière enduite de manière autocollante.

7. Support ( D ) de données suivant l'une des revendications 1 à 6,
dans lequel la couche ( S ) de protection est collée sur la deuxième feuille.

8. Agencement de détection d'une pièce ou d'un porte-pièce dans un agencement d'automatisation industrielle comprenant
- un support (D) de données pouvant être déchiffré visuellement suivant la revendication 1, par lequel la pièce ou le porte-pièce est repéré et
- un appareil LG de lecture, reposant sur un appareil photographique, pour déchiffrer le support (D) de données,
- dans lequel l'appareil ( LG ) de lecture est pourvu d'au moins une source ( LQ ) lumineuse, qui est disposée à proximité de son axe optique et qui est conçue pour éclairer le support ( D ) de données.
